# EUROPEAN PATENT SPECIFICATION

(11) **EP 2 443 754 B1**
(45) Date of publication and mention of the grant of the patent: **18.09.2013**
(21) Application number: 10739735.8
(22) Date of filing: 16.06.2010
(51) Int. Cl.: H04B 1/00

(54) **APPARATUS AND METHOD FOR MULTIPLE WIRELESS SERVICE COEXISTENCE**
VORRICHTUNG UND VERFAHREN FÜR DIE KOEXISTENZ MEHRERER DRAHTLOSER DIENSTE
APPAREIL ET PROCÉDÉ POUR COEXISTENCE DE SERVICES SANS FIL MULTIPLES

(30) Priority: 16.06.2009 US 187573 P; 20.07.2009 US 226747 P; 14.06.2010 US 815347
(43) Date of publication of application: 25.04.2012
(73) Proprietor: QUALCOMM Incorporated, San Diego, California 92121-1714 (US)
(72) Inventor: RICK, Roland, R., San Diego California 92121-1714 (US); KOHLMANN, Michael, San Diego California 92121-1714 (US); LANE, Mark, Vernon, San Diego California 92121-1714 (US); LINSKY, Joel, Benjamin, San Diego California 92121-1714 (US); JONES, Vincent, Knowles, San Diego California 92121-1714 (US)
(74) Representative: Carstens, Dirk Wilhelm
(86) International application number: PCT/US2010/038860
(87) International publication number: WO 2010/148114

(56) References cited:
- EP-A1- 1 551 080
- EP-A1- 1 729 464
- US-A1- 2004 052 272
- US-A1- 2005 047 038

## Description

### FIELD

This disclosure relates generally to apparatus and methods for wireless service coexistence. More particularly, the disclosure relates to multiple wireless service coexistence.

### BACKGROUND

In many telecommunication systems, communications networks are used to exchange messages among several interacting elements which are spatially separated. Communication networks may be classified in different aspects. In one example, the geographic scope of the network could be over a wide area, a metropolitan area, a local area, or a personal area, and the corresponding networks would be designated as wide area network (WAN), metropolitan area network (MAN), local area network (LAN), or personal area network (PAN). Networks also differ in the switching/routing technique used to interconnect the various network nodes and devices (e.g. circuit switching vs. packet switching), in the type of physical media employed for waveform propagation (e.g. wired vs. wireless), or in the set of communication protocols used (e.g. Internet protocol suite, SONET (Synchronous Optical Networking), Ethernet, etc.).
Attention is drawn to to document EP1551080 (A1), which aims to provide an antenna device which corresponds to a plurality of radio communications systems and frequency bands, which can simultaneously carry out a reception and a transmission of different radio communications systems, and which is capable of using antenna diversity, the described antenna device comprises a first antenna matching with first, second, and third frequency bands, a second antenna matching with the third frequency band, a diplexer and the like. For signals of the first frequency band, a high-frequency switch circuit connects a transmitter or a receiver to the diplexer by switching. For signals of the second frequency band, the high-frequency switch connects a receiver or a transmitter to the diplexer by switching. For signals of the third frequency band, the high-frequency switch circuit and a high-frequency switch circuit connect the second antenna or diplexer to a transmitter/receiver by switching.

### SUMMARY

In accordance with the present invention, a method for multiple wireless service coexistence, as set forth in claims 1 and 3, an apparatus for multiple wireless service coexistence, as set forth in claims 7 and 9, and a computer readable medium storing a computer program, as set forth in claim 13 and 14, are provided. Embodiments of the invention are provided in the dependent claims.

Disclosed is an apparatus and method for multiple wireless service coexistence. According to one aspect, a method for multiple wireless service coexistence comprising engaging a first switch to connect a first service transmitter to an antenna through a first filter path and to disconnect a first service receiver from the antenna; engaging a second switch to connect a second service receiver to the antenna through a second filter path and to disconnect a second service transmitter from the antenna; enabling transmit power control on the first service transmitter; and performing one or both of the following: a) transmitting a first service transmit signal through the first filter path to the antenna with high rejection of the band of a second service; b) receiving a second service receive signal through the second filter path from the antenna with high rejection of the band of a first service.

According to another aspect, a method for multiple wireless service coexistence comprising engaging a first switch to connect a first service transmitter to an antenna through a first filter path and to disconnect a first service receiver from the antenna; engaging a second switch to connect a second service transmitter to the antenna through a second filter path and to disconnect a second service receiver from the antenna; performing one or both of the following: a) transmitting a first service transmit signal through the first filter path to the antenna with high rejection of the band of a second service; b) transmitting a second service transmit signal through the second filter path from the antenna with high rejection of the band of a first service.

According to another aspect, a method for multiple wireless service coexistence comprising engaging a first switch to connect a first service receiver to an antenna through a first filter path and to disconnect a first service transmitter from the antenna; engaging a second switch to connect a second service receiver to the antenna through a second filter path and to disconnect a second service transmitter from the antenna; performing one or both of the following: a) receiving a first service receive signal through the first filter path to the antenna with high rejection of the band of a second service; b) receiving a second service receive signal through the second filter path from the antenna with high rejection of the band of a first service.

According to another aspect, a method for multiple wireless service coexistence comprising engaging one or more switching devices to perform the following: a) connecting a first service transmitter to a first antenna; b) disconnecting a dual mode receiver from the first antenna; c) disconnecting a second service transmitter from the first antenna; d) disconnecting the second service transmitter from a second antenna; e) connecting a diversity receiver to the second antenna; transmitting a first service transmit signal in a first service using the first antenna; and receiving a second service receive signal in a second service using the second antenna and the diversity receiver.

According to another aspect, a method for multiple wireless service coexistence comprising engaging one or more switching devices to perform the following: a) disconnecting a first service transmitter from a first antenna; b) connecting a dual mode receiver to the first antenna; c) disconnecting a second service transmitter from the first antenna; d) connecting the second service transmitter to a second antenna; e) disconnecting a diversity receiver from the second antenna; receiving a first service receive signal in a first service using the first antenna and the dual mode receiver; and transmitting a second service transmit signal in a second service using the second antenna.

According to another aspect, a method for multiple wireless service coexistence comprising engaging one or more switching devices to perform the following: a) connecting a first service transmitter to a first antenna; b) disconnecting a dual mode receiver from the first antenna; c) disconnecting a second service transmitter from the first antenna; d) connecting the second service transmitter to a second antenna; e) disconnecting a diversity receiver from the second antenna; transmitting a first service transmit signal in a first service using the first antenna; and transmitting a second service transmit signal in a second service using the second antenna.

According to another aspect, a method for multiple wireless service coexistence comprising engaging one or more switching devices to perform the following: a) disconnecting a first service transmitter from a first antenna; b) connecting a dual mode receiver to the first antenna; c) disconnecting a second service transmitter from the first antenna; d) disconnecting the second service transmitter from a second antenna; e) connecting a diversity receiver to the second antenna; receiving a first service receive signal in a first service using the first antenna and the dual mode receiver; and receiving a second service receive signal in a second service using the second antenna and the diversity receiver.

According to another aspect, an apparatus for multiple wireless service coexistence comprising means for engaging a first switch to connect a first service transmitter to an antenna through a first filter path and to disconnect a first service receiver from the antenna; means for engaging a second switch to connect a second service receiver to the antenna through a second filter path and to disconnect a second service transmitter from the antenna; means for enabling transmit power control on the first service transmitter; and means for performing one or both of the following: a) transmitting a first service transmit signal through the first filter path to the antenna with high rejection of the band of a second service; b) receiving a second service receive signal through the second filter path from the antenna with high rejection of the band of a first service.

According to another aspect, an apparatus for multiple wireless service coexistence comprising: means for engaging a first switch to connect a first service transmitter to an antenna through a first filter path and to disconnect a first service receiver from the antenna; means for engaging a second switch to connect a second service transmitter to the antenna through a second filter path and to disconnect a second service receiver from the antenna; means for performing one or both of the following: a) transmitting a first service transmit signal through the first filter path to the antenna with high rejection of the band of a second service; b) transmitting a second service transmit signal through the second filter path from the antenna with high rejection of the band of a first service.

According to another aspect, an apparatus for multiple wireless service coexistence comprising means for engaging a first switch to connect a first service receiver to an antenna through a first filter path and to disconnect a first service transmitter from the antenna; means for engaging a second switch to connect a second service receiver to the antenna through a second filter path and to disconnect a second service transmitter from the antenna; means for performing one or both of the following: a) receiving a first service receive signal through the first filter path to the antenna with high rejection of the band of a second service; b) receiving a second service receive signal through the second filter path from the antenna with high rejection of the band of a first service.

According to another aspect, an apparatus for multiple wireless service coexistence comprising means for engaging one or more switching devices to perform the following: a) connecting a first service transmitter to a first antenna; b) disconnecting a dual mode receiver from the first antenna; c) disconnecting a second service transmitter from the first antenna; d) disconnecting the second service transmitter from a second antenna; e) connecting a diversity receiver to the second antenna; means for transmitting a first service transmit signal in a first service using the first antenna; and means for receiving a second service receive signal in a second service using the second antenna and the diversity receiver.

According to another aspect, an apparatus for multiple wireless service coexistence comprising means for engaging one or more switching devices to perform the following: a) disconnecting a first service transmitter from a first antenna; b) connecting a dual mode receiver to the first antenna; c) disconnecting a second service transmitter from the first antenna; d) connecting the second service transmitter to a second antenna; e) disconnecting a diversity receiver from the second antenna; means for receiving a first service receive signal in a first service using the first antenna and the dual mode receiver; and means for transmitting a second service transmit signal in a second service using the second antenna.

According to another aspect, an apparatus for multiple wireless service coexistence comprising means for engaging one or more switching devices to perform the following: a) connecting a first service transmitter to a first antenna; b) disconnecting a dual mode receiver from the first antenna; c) disconnecting a second service transmitter from the first antenna; d) connecting the second service transmitter to a second antenna; e) disconnecting a diversity receiver from the second antenna; means for transmitting a first service transmit signal in a first service using the first antenna; and means for transmitting a second service transmit signal in a second service using the second antenna.

According to another aspect, an apparatus for multiple wireless service coexistence comprising means for engaging one or more switching devices to perform the following: a) disconnecting a first service transmitter from a first antenna; b) connecting a dual mode receiver to the first antenna; c) disconnecting a second service transmitter from the first antenna; d) disconnecting the second service transmitter from a second antenna; e) connecting a diversity receiver to the second antenna; means for receiving a first service receive signal in a first service using the first antenna and the dual mode receiver; and means for receiving a second service receive signal in a second service using the second antenna and the diversity receiver.

According to another aspect, an apparatus comprising a processor and a memory, the memory containing program code executable by the processor for performing the following: engaging a first switch to connect a first service transmitter to an antenna through a first filter path and to disconnect a first service receiver from the antenna; engaging a second switch to connect a second service receiver to the antenna through a second filter path and to disconnect a second service transmitter from the antenna; enabling transmit power control on the first service transmitter; and performing one or both of the following: a) transmitting a first service transmit signal through the first filter path to the antenna with high rejection of the band of a second service; b) receiving a second service receive signal through the second filter path from the antenna with high rejection of the band of a first service.

According to another aspect, an apparatus comprising a processor and a memory, the memory containing program code executable by the processor for performing the following: engaging a first switch to connect a first service transmitter to an antenna through a first filter path and to disconnect a first service receiver from the antenna; engaging a second switch to connect a second service transmitter to the antenna through a second filter path and to disconnect a second service receiver from the antenna; performing one or both of the following: a) transmitting a first service transmit signal through the first filter path to the antenna with high rejection of the band of a second service; b) transmitting a second service transmit signal through the second filter path from the antenna with high rejection of the band of a first service.

According to another aspect, an apparatus comprising a processor and a memory, the memory containing program code executable by the processor for performing the following: engaging a first switch to connect a first service receiver to an antenna through a first filter path and to disconnect a first service transmitter from the antenna; engaging a second switch to connect a second service receiver to the antenna through a second filter path and to disconnect a second service transmitter from the antenna; performing one or both of the following: a) receiving a first service receive signal through the first filter path to the antenna with high rejection of the band of a second service; b) receiving a second service receive signal through the second filter path from the antenna with high rejection of the band of a first service.

According to another aspect, an apparatus comprising a processor and a memory, the memory containing program code executable by the processor for performing the following engaging one or more switching devices to perform the following: a) connecting a first service transmitter to a first antenna; b) disconnecting a dual mode receiver from the first antenna; c) disconnecting a second service transmitter from the first antenna; d) disconnecting the second service transmitter from a second antenna; e) connecting a diversity receiver to the second antenna; transmitting a first service transmit signal in a first service using the first antenna; and receiving a second service receive signal in a second service using the second antenna and the diversity receiver.

According to another aspect, an apparatus comprising a processor and a memory, the memory containing program code executable by the processor for performing the following engaging one or more switching devices to perform the following: a) disconnecting a first service transmitter from a first antenna; b) connecting a dual mode receiver to the first antenna; c) disconnecting a second service transmitter from the first antenna; d) connecting the second service transmitter to a second antenna; e) disconnecting a diversity receiver from the second antenna; receiving a first service receive signal in a first service using the first antenna and the dual mode receiver; and transmitting a second service transmit signal in a second service using the second antenna.

According to another aspect, an apparatus comprising a processor and a memory, the memory containing program code executable by the processor for performing the following engaging one or more switching devices to perform the following: a) connecting a first service transmitter to a first antenna; b) disconnecting a dual mode receiver from the first antenna; c) disconnecting a second service transmitter from the first antenna; d) connecting the second service transmitter to a second antenna; e) disconnecting a diversity receiver from the second antenna; transmitting a first service transmit signal in a first service using the first antenna; and transmitting a second service transmit signal in a second service using the second antenna.

According to another aspect, an apparatus comprising a processor and a memory, the memory containing program code executable by the processor for performing the following engaging one or more switching devices to perform the following: a)disconnecting a first service transmitter from a first antenna; b) connecting a dual mode receiver to the first antenna; c) disconnecting a second service transmitter from the first antenna; d) disconnecting the second service transmitter from a second antenna; e) connecting a diversity receiver to the second antenna; receiving a first service receive signal in a first service using the first antenna and the dual mode receiver; and receiving a second service receive signal in a second service using the second antenna and the diversity receiver.

According to another aspect, an computer-readable medium storing a computer program, wherein execution of the computer program is for engaging a first switch to connect a first service transmitter to an antenna through a first filter path and to disconnect a first service receiver from the antenna; engaging a second switch to connect a second service receiver to the antenna through a second filter path and to disconnect a second service transmitter from the antenna; enabling transmit power control on the first service transmitter; and performing one or both of the following: a) transmitting a first service transmit signal through the first filter path to the antenna with high rejection of the band of a second service; b) receiving a second service receive signal through the second filter path from the antenna with high rejection of the band of a first service.

According to another aspect, a computer-readable medium storing a computer program, wherein execution of the computer program is for engaging a first switch to connect a first service transmitter to an antenna through a first filter path and to disconnect a first service receiver from the antenna; engaging a second switch to connect a second service transmitter to the antenna through a second filter path and to disconnect a second service receiver from the antenna; performing one or both of the following: a) transmitting a first service transmit signal through the first filter path to the antenna with high rejection of the band of a second service; b) transmitting a second service transmit signal through the second filter path from the antenna with high rejection of the band of a first service.

According to another aspect, a computer-readable medium storing a computer program, wherein execution of the computer program is for engaging a first switch to connect a first service receiver to an antenna through a first filter path and to disconnect a first service transmitter from the antenna; engaging a second switch to connect a second service receiver to the antenna through a second filter path and to disconnect a second service transmitter from the antenna; performing one or both of the following: a) receiving a first service receive signal through the first filter path to the antenna with high rejection of the band of a second service; b) receiving a second service receive signal through the second filter path from the antenna with high rejection of the band of a first service.

According to another aspect, a computer-readable medium storing a computer program, wherein execution of the computer program is for engaging one or more switching devices to perform the following: a) connecting a first service transmitter to a first antenna; b) disconnecting a dual mode receiver from the first antenna; c) disconnecting a second service transmitter from the first antenna; d) disconnecting the second service transmitter from a second antenna; e) connecting a diversity receiver to the second antenna; transmitting a first service transmit signal in a first service using the first antenna; and receiving a second service receive signal in a second service using the second antenna and the diversity receiver.

According to another aspect, a computer-readable medium storing a computer program, wherein execution of the computer program is for engaging one or more switching devices to perform the following: a) disconnecting a first service transmitter from a first antenna; b) connecting a dual mode receiver to the first antenna; c) disconnecting a second service transmitter from the first antenna; d) connecting the second service transmitter to a second antenna; e) disconnecting a diversity receiver from the second antenna; receiving a first service receive signal in a first service using the first antenna and the dual mode receiver; and transmitting a second service transmit signal in a second service using the second antenna.

According to another aspect, a computer-readable medium storing a computer program, wherein execution of the computer program is for engaging one or more switching devices to perform the following: a) connecting a first service transmitter to a first antenna; b) disconnecting a dual mode receiver from the first antenna; c) disconnecting a second service transmitter from the first antenna; d) connecting the second service transmitter to a second antenna; e) disconnecting a diversity receiver from the second antenna; transmitting a first service transmit signal in a first service using the first antenna; and transmitting a second service transmit signal in a second service using the second antenna.

According to another aspect, a computer-readable medium storing a computer program, wherein execution of the computer program is for engaging one or more switching devices to perform the following: a) disconnecting a first service transmitter from a first antenna; b) connecting a dual mode receiver to the first antenna; c) disconnecting a second service transmitter from the first antenna; d) disconnecting the second service transmitter from a second antenna; e) connecting a diversity receiver to the second antenna; receiving a first service receive signal in a first service using the first antenna and the dual mode receiver; and receiving a second service receive signal in a second service using the second antenna and the diversity receiver.

A potential advantage of the present disclosure includes the ability to achieve concurrent full throughput of multiple wireless services on a single device, such as an access terminal, a user equipment, a mobile device, etc.

It is understood that other aspects will become readily apparent to those skilled in the art from the following detailed description, wherein it is shown and described various aspects by way of illustration. The drawings and detailed description are to be regarded as illustrative in nature and not as restrictive.

### BRIEF DESCRIPTION OF THE DRAWINGS

Figure 1 is a block diagram illustrating an example access node/UE system.

Figure 2 illustrates an example of a wireless communications system that supports a plurality of users.

Figure 3 illustrates an example of a two antenna diversity solution for BT-WLAN coexistence.

Figure 4 illustrates an example of a programmable diplexer solution for BT-WLAN coexistence.

Figure 5 illustrates an example of a MEMS diplexer solution for BT-WLAN coexistence which provides simultaneous WLAN transmission and BT reception.

Figures 6a, 6b and 6c illustrate examples of filter responses. Figure 6a shows the filter response for a MEMS-based diplexer, where the trace for filter #1 shows the response of the BT path and the trace for filter #2 shows the response of the WLAN path.

Figure 7-13 illustrate examples of flow diagrams for multiple wireless service coexistence.

Figure 14 illustrates an example of a device comprising a processor in communication with a memory for executing the processes for multiple wireless service coexistence.

Figure 15-21 illustrate examples of devices suitable for multiple wireless service coexistence.

### DETAILED DESCRIPTION

The detailed description set forth below in connection with the appended drawings is intended as a description of various aspects of the present disclosure and is not intended to represent the only aspects in which the present disclosure may be practiced. Each aspect described in this disclosure is provided merely as an example or illustration of the present disclosure, and should not necessarily be construed as preferred or advantageous over other aspects. The detailed description includes specific details for the purpose of providing a thorough understanding of the present disclosure. However, it will be apparent to those skilled in the art that the present disclosure may be practiced without these specific details. In some instances, well-known structures and devices are shown in block diagram form in order to avoid obscuring the concepts of the present disclosure. Acronyms and other descriptive terminology may be used merely for convenience and clarity and are not intended to limit the scope of the present disclosure.

While for purposes of simplicity of explanation, the methodologies are shown and described as a series of acts, it is to be understood and appreciated that the methodologies are not limited by the order of acts, as some acts may, in accordance with one or more aspects, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with one or more aspects.

The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), cdma2000, etc. UTRA includes Wideband-CDMA (W-CDMA) and Low Chip Rate (LCR). Cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), IEEE 802.11, IEEE 802.16, IEEE 802.20, Flash-OFDM®, etc. UTRA, E-UTRA, and GSM are part of Universal Mobile Telecommunication System (UMTS). Long Term Evolution (LTE) is an upcoming release of UMTS that uses E-UTRA. UTRA, E-UTRA, GSM, UMTS and LTE are described in documents from an organization named "3rd Generation Partnership Project" (3GPP). cdma2000 is described in documents from an organization named "3rd Generation Partnership Project 2" (3GPP2). These various radio technologies and standards are known in the art.

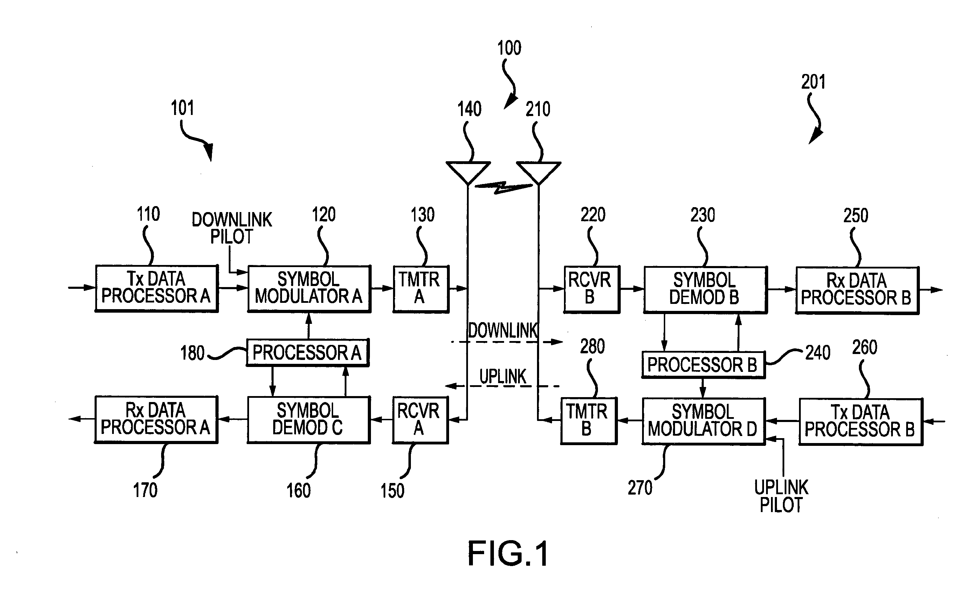

Figure 1 is a block diagram illustrating an example access node/UE system 100. One skilled in the art would understand that the example access node/UE system 100 illustrated in Figure 1 may be implemented in an FDMA environment, an OFDMA environment, a CDMA environment, a WCDMA environment, a TDMA environment, a SDMA environment or any other suitable wireless environment.

The access node/UE system 100 includes an access node 101 (e.g., base station) and a user equipment or UE 201 (e.g., wireless communication device). In the downlink leg, the access node 101 (e.g., base station) includes a transmit (TX) data processor A 110 that accepts, formats, codes, interleaves and modulates (or symbol maps) traffic data and provides modulation symbols (e.g., data symbols). The TX data processor A 110 is in communication with a symbol modulator A 120. The symbol modulator A 120 accepts and processes the data symbols and downlink pilot symbols and provides a stream of symbols. In one aspect, it is the symbol modulator A 120 that modulates (or symbol maps) traffic data and provides modulation symbols (e.g., data symbols). In one aspect, symbol modulator A 120 is in communication with processor A 180 which provides configuration information. Symbol modulator A 120 is in communication with a transmitter unit (TMTR) A 130. The symbol modulator A 120 multiplexes the data symbols and downlink pilot symbols and provides them to the transmitter unit A 130.

Each symbol to be transmitted may be a data symbol, a downlink pilot symbol or a signal value of zero. The downlink pilot symbols may be sent continuously in each symbol period. In one aspect, the downlink pilot symbols are frequency division multiplexed (FDM). In another aspect, the downlink pilot symbols are orthogonal frequency division multiplexed (OFDM). In yet another aspect, the downlink pilot symbols are code division multiplexed (CDM). In one aspect, the transmitter unit A 130 receives and converts the stream of symbols into one or more analog signals and further conditions, for example, amplifies, filters and/or frequency upconverts the analog signals, to generate an analog downlink signal suitable for wireless transmission. The analog downlink signal is then transmitted through antenna 140.

In the downlink leg, the UE 201 includes antenna 210 for receiving the analog downlink signal and inputting the analog downlink signal to a receiver unit (RCVR) B 220. In one aspect, the receiver unit B 220 conditions, for example, filters, amplifies, and frequency downconverts the analog downlink signal to a first "conditioned" signal. The first "conditioned" signal is then sampled. The receiver unit B 220 is in communication with a symbol demodulator B 230. The symbol demodulator B 230 demodulates the first "conditioned" and "sampled" signal (e.g., data symbols) outputted from the receiver unit B 220. One skilled in the art would understand that an alternative is to implement the sampling process in the symbol demodulator B 230. The symbol demodulator B 230 is in communication with a processor B 240. Processor B 240 receives downlink pilot symbols from symbol demodulator B 230 and performs channel estimation on the downlink pilot symbols. In one aspect, the channel estimation is the process of characterizing the current propagation environment. The symbol demodulator B 230 receives a frequency response estimate for the downlink leg from processor B 240. The symbol demodulator B 230 performs data demodulation on the data symbols to obtain data symbol estimates on the downlink path. The data symbol estimates on the downlink path are estimates of the data symbols that were transmitted. The symbol demodulator B 230 is also in communication with a RX data processor B 250.

The RX data processor B 250 receives the data symbol estimates on the downlink path from the symbol demodulator B 230 and, for example, demodulates (i.e., symbol demaps), deinterleaves and/or decodes the data symbol estimates on the downlink path to recover the traffic data. In one aspect, the processing by the symbol demodulator B 230 and the RX data processor B 250 is complementary to the processing by the symbol modulator A 120 and TX data processor A 110, respectively.

In the uplink leg, the UE 201 includes a TX data processor B 260. The TX data processor B 260 accepts and processes traffic data to output data symbols. The TX data processor B 260 is in communication with a symbol modulator D 270. The symbol modulator D 270 accepts and multiplexes the data symbols with uplink pilot symbols, performs modulation and provides a stream of symbols. In one aspect, symbol modulator D 270 is in communication with processor B 240 which provides configuration information. The symbol modulator D 270 is in communication with a transmitter unit B 280.

Each symbol to be transmitted may be a data symbol, an uplink pilot symbol or a signal value of zero. The uplink pilot symbols may be sent continuously in each symbol period. In one aspect, the uplink pilot symbols are frequency division multiplexed (FDM). In another aspect, the uplink pilot symbols are orthogonal frequency division multiplexed (OFDM). In yet another aspect, the uplink pilot symbols are code division multiplexed (CDM). In one aspect, the transmitter unit B 280 receives and converts the stream of symbols into one or more analog signals and further conditions, for example, amplifies, filters and/or frequency upconverts the analog signals, to generate an analog uplink signal suitable for wireless transmission. The analog uplink signal is then transmitted through antenna 210.

The analog uplink signal from UE 201 is received by antenna 140 and processed by a receiver unit A 150 to obtain samples. In one aspect, the receiver unit A 150 conditions, for example, filters, amplifies and frequency downconverts the analog uplink signal to a second "conditioned" signal. The second "conditioned" signal is then sampled. The receiver unit A 150 is in communication with a symbol demodulator C 160. One skilled in the art would understand that an alternative is to implement the sampling process in the symbol demodulator C 160. The symbol demodulator C 160 performs data demodulation on the data symbols to obtain data symbol estimates on the uplink path and then provides the uplink pilot symbols and the data symbol estimates on the uplink path to the RX data processor A 170. The data symbol estimates on the uplink path are estimates of the data symbols that were transmitted. The RX data processor A 170 processes the data symbol estimates on the uplink path to recover the traffic data transmitted by the wireless communication device 201. The symbol demodulator C 160 is also in communication with processor A 180. Processor A 180 performs channel estimation for each active terminal transmitting on the uplink leg. In one aspect, multiple terminals may transmit pilot symbols concurrently on the uplink leg on their respective assigned sets of pilot subbands where the pilot subband sets may be interlaced.

Processor A 180 and processor B 240 direct (i.e., control, coordinate or manage, etc.) operation at the access node 101 (e.g., base station) and at the UE 201, respectively. In one aspect, either or both processor A 180 and processor B 240 are associated with one or more memory units (not shown) for storing of program codes and/or data. In one aspect, either or both processor A 180 or processor B 240 or both perform computations to derive frequency and impulse response estimates for the uplink leg and downlink leg, respectively.

In one aspect, the access node/UE system 100 is a multiple-access system. For a multiple-access system (e.g., frequency division multiple access (FDMA), orthogonal frequency division multiple access (OFDMA), code division multiple access (CDMA), time division multiple access (TDMA), space division multiple access (SDMA), etc.), multiple terminals transmit concurrently on the uplink leg, allowing access to a plurality of UEs. In one aspect, for the multiple-access system, the pilot subbands may be shared among different terminals. Channel estimation techniques are used in cases where the pilot subbands for each terminal span the entire operating band (possibly except for the band edges). Such a pilot subband structure is desirable to obtain frequency diversity for each terminal.

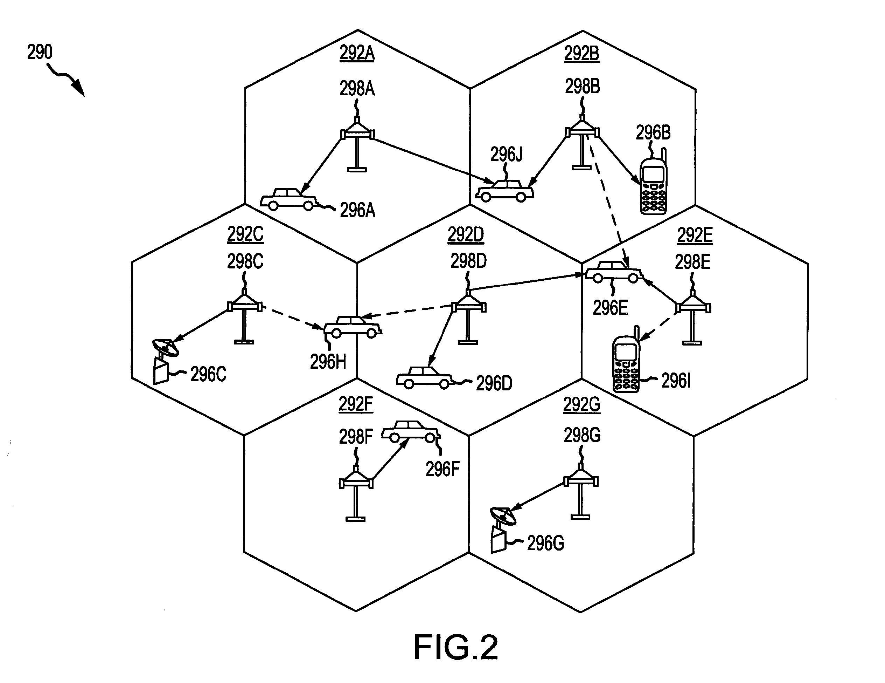

Figure 2 illustrates an example of a wireless communications system 290 that supports a plurality of users (e.g., mobile user devices 296B, 2961). In Figure 2, reference numerals 292A to 292G refer to cells, reference numerals 298A to 298G refer to base stations (BS) or base transceiver station (BTS) and reference numerals 296A to 296J refer to access User Equipments (UE) or mobile user devices. Cell size may vary. Any of a variety of algorithms and methods may be used to schedule transmissions in system 290. System 290 provides communication for a number of cells 292A through 292G, each of which is serviced by a corresponding base station 298A through 298G, respectively.

One important characteristic of communications networks is the choice of wired or wireless media for the transmission of electrical signals among the constituents of the network. In the case of wired networks, tangible physical media such as copper wire, coaxial cable, fiber optic cable, etc. are employed to propagate guided electromagnetic waveforms which carry message traffic over a distance. Wired networks are a traditional form of communications networks and are typically favored for interconnection of fixed network elements or for bulk data transfer. For example, fiber optic cables are often the preferred transmission media for very high throughput transport applications over long distances between large network hubs, for example, bulk data transport across or between continents over the Earth's surface.

On the other hand, in many cases, wireless networks are preferred when the network elements are mobile with dynamic connectivity or if the network architecture is formed in an ad hoc, rather than fixed, topology. Wireless networks employ intangible physical media in an unguided propagation mode using electromagnetic waves in the radio, microwave, infrared, optical, etc. frequency bands. Wireless networks have the distinct advantage of facilitating user mobility and rapid field deployment compared to fixed wired networks. However, usage of wireless propagation requires significant active resource management among the network users and high levels of mutual coordination and cooperation for compatible spectrum utilization.

For example, popular wireless network technologies include Bluetooth (BT) and wireless local area networks (WLAN). Bluetooth and WLAN are both wireless communication technologies designed for providing connectivity to devices.

Bluetooth, for example, is used for wireless headsets and connections between phones and laptops. Bluetooth is a widely used wireless communications protocol to implement a wireless personal area network (WPAN) over very short distances, typically for a coverage area of a few meters radius, as an alternative to wired interconnection among local components. In one example, Bluetooth may be used to connect personal computers, personal digital assistants (PDA), mobile phones, wireless headsets, etc.

Alternatively, a WLAN may be used to interconnect nearby devices together, employing widely used networking protocols such as WiFi or, more generally, a member of the IEEE 802.11 wireless protocol family. WLAN, for example, is used for wireless networks in a home or business (a.k.a. WiFi).

One issue with wireless network technologies is that they often share the same frequency band for transmission. Thus, co-channel interference is a problem that must be actively managed. For example, both Bluetooth and WLAN systems may use the same unlicensed Industrial, Scientific, and Medical (ISM) spectral band centered around 2.4 GHz. In one example, mobile devices may share a cost-effective common antenna which accesses both wireless technologies. To support user scenarios with simultaneous BT and WLAN operation, time division multiple access (TDMA) coexistence algorithms are implemented. Thus, a coexistence algorithm is needed to arbitrate usage between Bluetooth and WLAN access technologies for co-located wireless devices.

However, performance improvement can be achieved by running the systems concurrently using separate antennas for BT and WLAN and designing the BT and WLAN RF circuits to accommodate the presence of a strong interfering technology within the same device. Additionally, changes in BT and WLAN power control responsive to the transmit and receive power levels of each technology can be implemented to improve the range of conditions over which dual antenna concurrency is possible. Also, a high level algorithm can be implemented to switch between dual antenna concurrency and traditional TDMA techniques responsive to the signal conditions and performance.

In another aspect, alternate antenna implementations may be used. For example, the mobile device may implement dynamic switching between a wide area network (WAN) antenna and a dual antenna for BT and WLAN. In one example, a second antenna is implemented as a printed circuit on an electronics package. Alternately, a single antenna with programmable diplexers or special combiner is used to obtain the performance benefits of a dual antenna with the lower cost of a single physical antenna. In one example, the diplexer is implemented with microelectromechanical system (MEMS) technology to provide sufficient RF isolation.

Example antenna types that may be employed in the present disclosure are dipole, helix, patch, microstrip, whip, monopole, etc. One skilled in the art would understand that these example antenna types are not restrictive and other antenna types may be used without affecting the scope or spirit of the present disclosure.

In one aspect, there are several approaches towards coexistence between a wireless personal area network (WPAN) such as Bluetooth (BT) and a wireless local area network (WLAN). In one example, time division multiplexing (TDM) may be used as a medium access control (MAC) level technique to allow only one wireless system to operate at a given time, for example, using packet traffic arbitration (PTA) or 802.11 protocol features to control access point (AP) timing. In this case, the maximum possible throughput is dictated by the percentage of time a system has the channel.

In another example, transmission concurrency with RF isolation may be used for coexistence. For example, transmission concurrency may include both frequency separation (e.g., BT automatic frequency hopping) and interference reduction between the transmitter of one technology and the receiver of the other technology. Transmission concurrency may be obtained, for example, through a single antenna with a programmable diplexer using microelectromechanical systems (MEMS) technology or a dual antenna with good RF isolation between the two antenna ports. In this case, full standalone throughput may be achieved when the RF isolation is sufficient for the given signal conditions.

In another example, transmission concurrency may be obtained, for example, by combining both TDM with antenna RF isolation. For example, TDM may be used when automatic frequency hopping (AFH) is not possible or when the AFH frequencies overlap with the WLAN frequencies. Alternatively, TDM may be used when the transmit power of one technology is strong and the receive power of the other technology is weak such that the isolation is insufficient. In another example, RF isolation may be used the remainder of the time. In this case, performance of any RF isolation scheme is quantified by the range of practical conditions where the 2 systems can operate at full concurrency.

In one aspect, a shared low noise amplifier (LNA) design is beneficial thorough improved standalone performance and increasing receiver sensitivity by removing a switch insertion loss. For example, a shared LNA design for BT/WLAN coexistence may have a sensitivity improvement on the order of 0.5 to 1.5 dB.

In another example, in conjunction with a single antenna shared LNA approach, a two antenna solution without additional RF faltering could be used for BT-WLAN coexistence. In one example, a primary antenna and LNA could be used solely for BT mode and a separate, diversity antenna and LNA could be used by WLAN mode. In one example, an extra switch may be needed to route WLAN transmit signals to the diversity antenna.

Table 1 below illustrates an example performance summary for a BT-WLAN coexistence solution. As can be seen, in general, full concurrency operation is more probable as the transmission ranges for both BT and WLAN modes become smaller. Conversely, concurrent operation is less likely and TDM techniques are favored as the transmission ranges for both BT and WLAN become larger. In one example, full concurrency operation is enabled with transmit power control for BT, WLAN or both modes. In another example, dynamic switching is provided between concurrency operation and TDM operation depending on the relative transmission ranges.

**Table 1**

| WLAN RANGE | | | | |
|---|---|---|---|---|
| | | Short | Medium | Long |
| BT RANGE | Short | Full concurrency possible with minimal restrictions on BT/WLAN Tx power. | Full concurrency possible with ∼ 10dB reduction in BT max Tx power which should happen naturally with BT power control in short range conditions. | Concurrency may be possible with ∼3dB WLAN sensitivity loss and ∼20 dB reduction in BT max Tx power which may require minor BT power control changes. |
| | Medium | Full concurrency possible with ∼10dB reduction in WLAN max Tx power. This requires new WLAN power control algorithms and is only possible if other WLAN stations can detect our transmissions. | Full concurrency possible with ∼10dB reduction in both BT and WLAN max power which will require changes to both BT and WLAN power control algorithms and is only possible if other WLAN stations can detect our transmissions. | Concurrency not possible. Traditional TDM techniques will be utilized. |
| | Long | Concurrency may be possible with ∼3dB BT sensitivity loss and ∼20dB reduction in WLAN max Tx power. This may not be possible if other WLAN stations exist. | Concurrency not possible. Traditional TDM techniques will be utilized. | Concurrency not possible. Traditional TDM techniques will be utilized. |

In one example, during concurrent operation with separate antennas, the WLAN mode may use the diversity antenna and the BT mode may use the primary antenna. In addition, the WLAN receiver may use the diversity LNA and the WLAN transmitter may be routed to the diversity antenna. In one aspect, the WLAN diversity path receive path filter will increase from a third order to a fifth order at the cost of more required real estate, for example, an extra 0.2 mm². In another aspect, automatic gain control (AGC) algorithms will change without hardware impact.

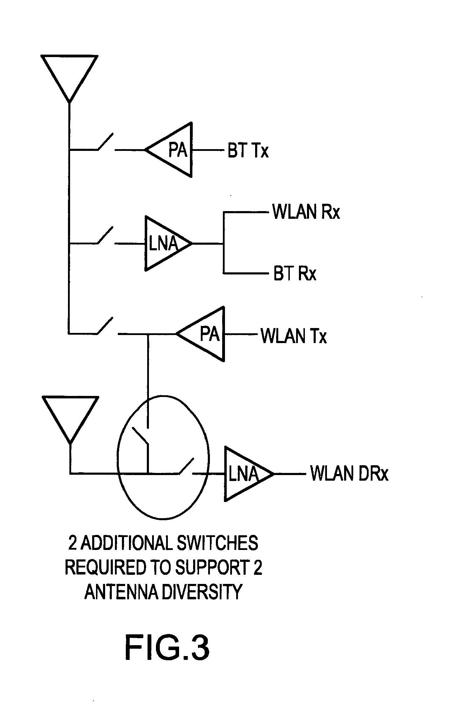

Figure 3 illustrates an example of a two antenna diversity solution for BT-WLAN coexistence. For example, separate power amplifiers (PAs) for BT and WLAN transmit modes are illustrated. Also, separate low noise amplifiers (LNAs) are connected to a primary antenna and a diversity antenna, respectively. Moreover, in one example, the WLAN transmit mode PA may be switched between the primary antenna or the diversity antenna.

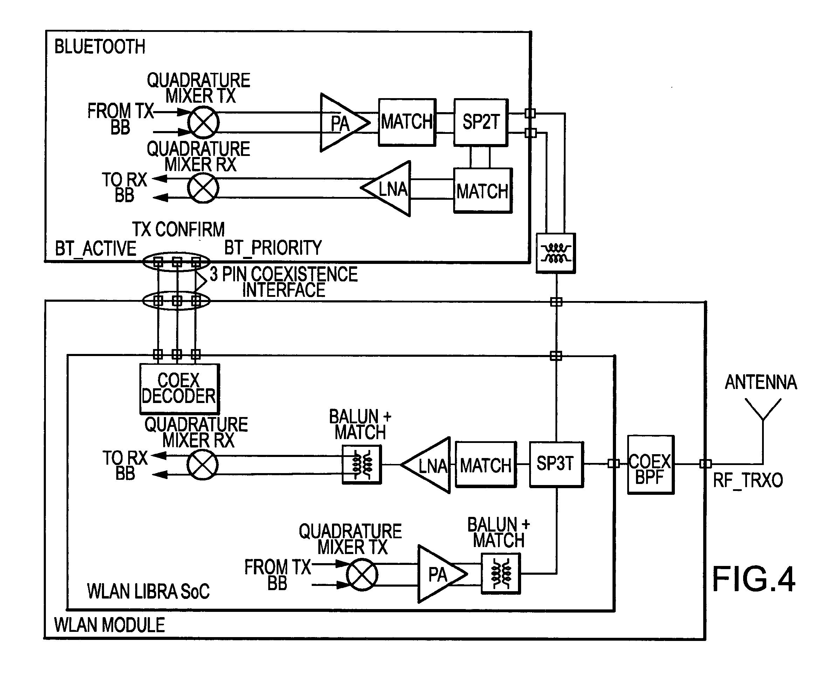

Figure 4 illustrates an example of a programmable diplexer solution for BT-WLAN coexistence. In one example, an antenna switch is located on one WLAN System on a Chip (SOC) board. In another example, a balun (i.e. balanced/unbalanced signal transformer) is external to, but physically close to a WLAN module.

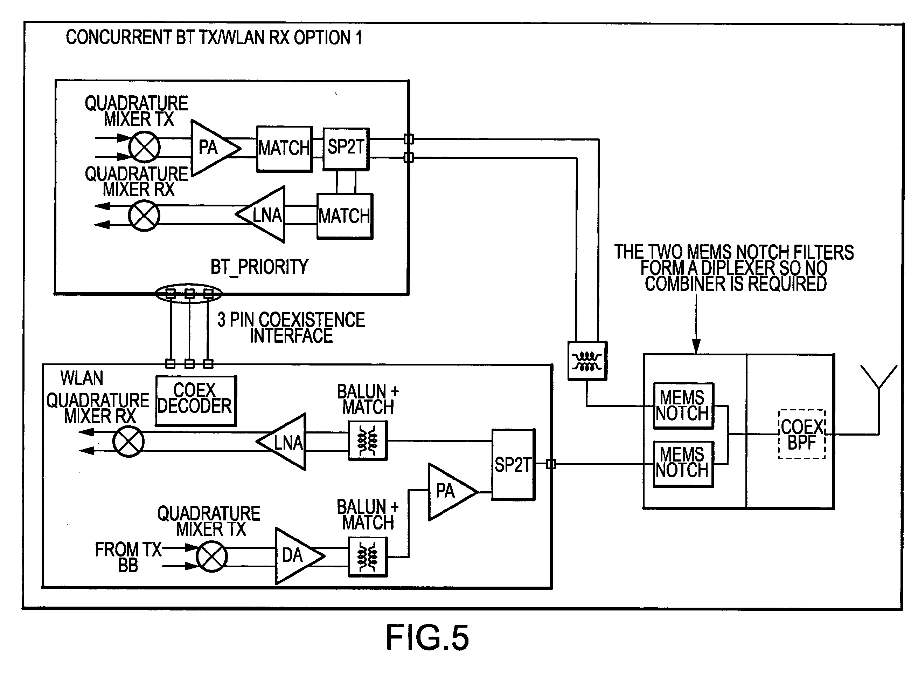

Figure 5 illustrates an example of a MEMS diplexer solution for BT-WLAN coexistence which provides simultaneous WLAN transmission and BT reception. In one example, two MEMS notch filters are connected to individual signal paths between the common antenna and the BT module and WLAN module. In one example, the two MEMS notch filters form a diplexer such that no combiner is required. In addition, a coexistence bandpass filter (BPF) which uses the same physical substrate as the MEMS notch filters may be included at the antenna interface.

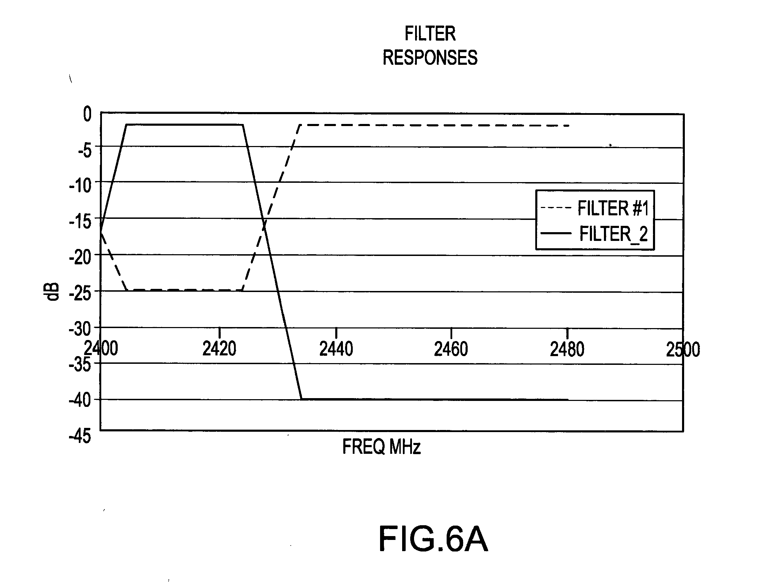

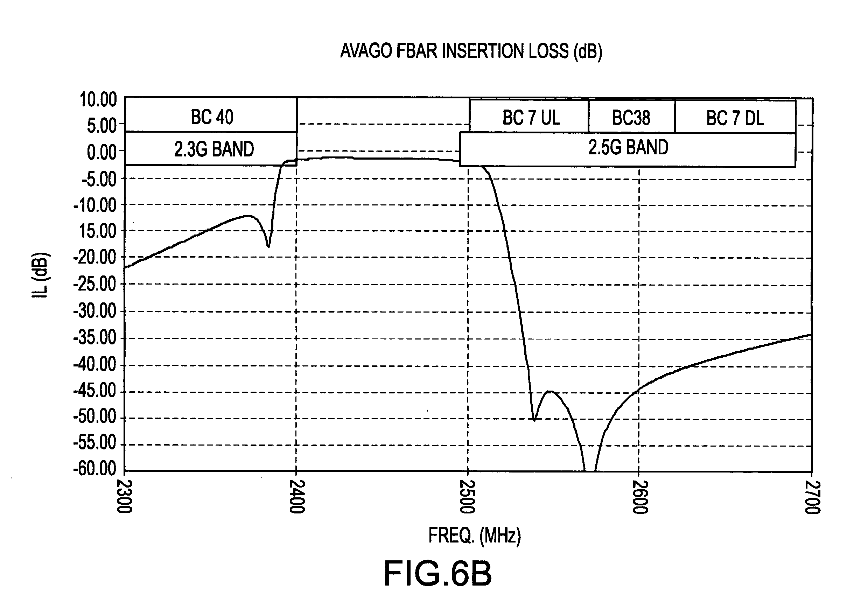

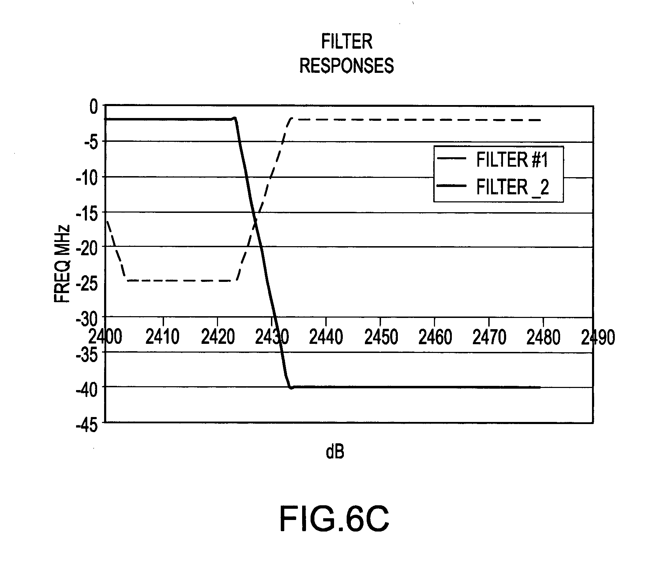

In one aspect, a MEMS-based diplexer could diplex the WLAN operational frequency from the rest of the ISM band which the BT system could use. Figures 6a, 6b and 6c illustrate examples of filter responses. For example, Figure 6a shows the filter response for a MEMS-based diplexer, where the trace for filter #1 shows the response of the BT path and the trace for filter #2 shows the response of the WLAN path. In Figure 6a, the MEMs are configured as diplexer. In one aspect, it may separate the WLAN operational frequency from the rest of the ISM band which BT would use. In one example, the filter #1 response rejects the BT transmit wideband noise which falls into the WLAN band and the filter #2 response rejects the BT signal that would otherwise interfere with the WLAN receiver.

In one example, a MEMS-based diplexer is programmable. This programmability implies that the diplexer may be totally reconfigurable should the WLAN operational band change. In the case of BT or WLAN operation, where one or the other mode is operational, in one example, the MEMS-based diplexer in the unused path may be programmed to a high impedance state. In one aspect, high impedance state is attained in one of two ways: (1) for the case of WLAN operational mode only, the MEMS-based diplexer in the BT path may remain unchanged as this path would already be in a high impedance state. However, it may be possible to make this high impedance state have an even higher impedance since in this case there is no requirement for a low insertion loss for the BT mode (i.e., the BT mode is non-operational). In the case of BT operational mode only, the reverse may be true. (2) The MEMS-based diplexer notch may be programmed to be much wider in frequency extent and much deeper in insertion loss so that it has higher impedance and is a better open circuit. In one example, the basis behind the programming of the MEMS-based diplexer in single mode operation is to make the diplexer operate more like a switch. In addition, having the MEMS-based diplexer operate more like a switch in a single mode operation implies that time-shared operations is also possible. In particular, packet traffic arbitration (PTA)-based control is also possible. In another example, a bandpass filter (BPF) may be included with the diplexer design.

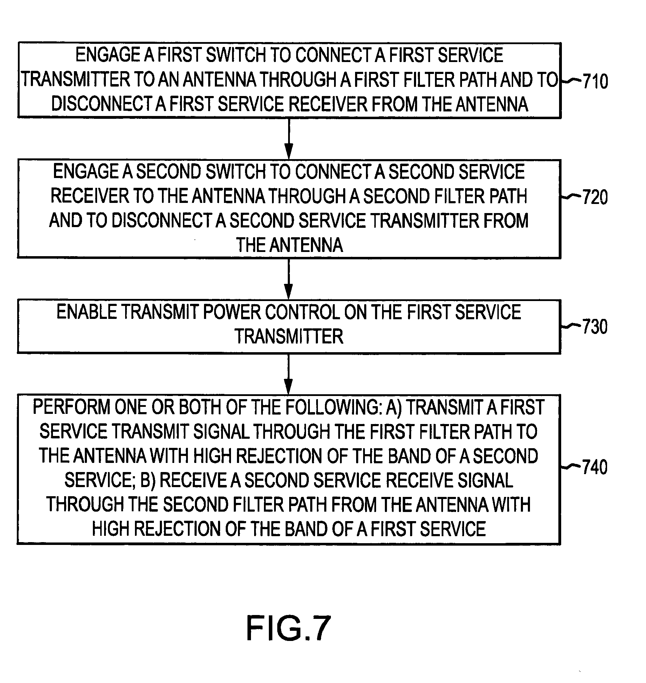

Figure 7 illustrates an example of a first flow diagram for multiple wireless service coexistence. In block 710, engage a first switch to connect a first service transmitter to an antenna through a first filter path and to disconnect a first service receiver from the antenna. In block 720, engage a second switch to connect a second service receiver to the antenna through a second filter path and to disconnect a second service transmitter from the antenna. In block 730, enable transmit power control on the first service transmitter. In block 740, perform one or both of the following: a) transmit a first service transmit signal through the first filter path to the antenna with high rejection of the band of a second service; b) receive a second service receive signal through the second filter path from the antenna with high rejection of the band of a first service.

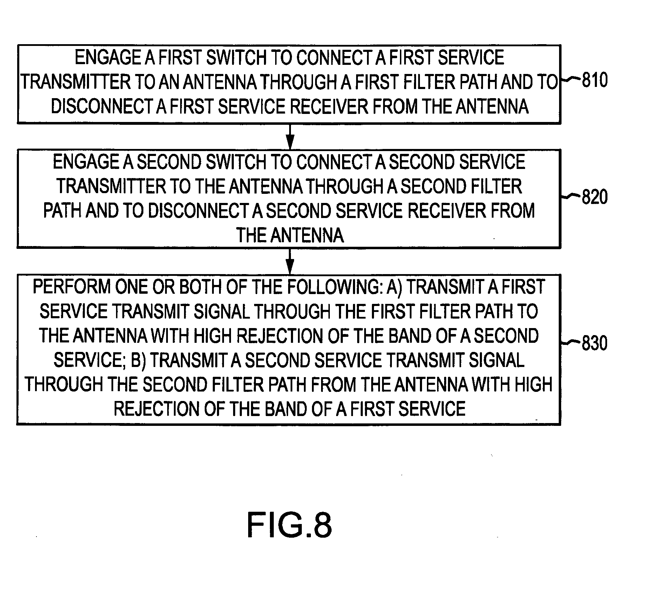

Figure 8 illustrates an example of a first flow diagram for multiple wireless service coexistence. In block 810, engage a first switch to connect a first service transmitter to an antenna through a first filter path and to disconnect a first service receiver from the antenna. In block 820, engage a second switch to connect a second service transmitter to the antenna through a second filter path and to disconnect a second service receiver from the antenna. In block 830, perform one or both of the following: a) transmit a first service transmit signal through the first filter path to the antenna with high rejection of the band of a second service; b) transmit a second service transmit signal through the second filter path from the antenna with high rejection of the band of a first service.

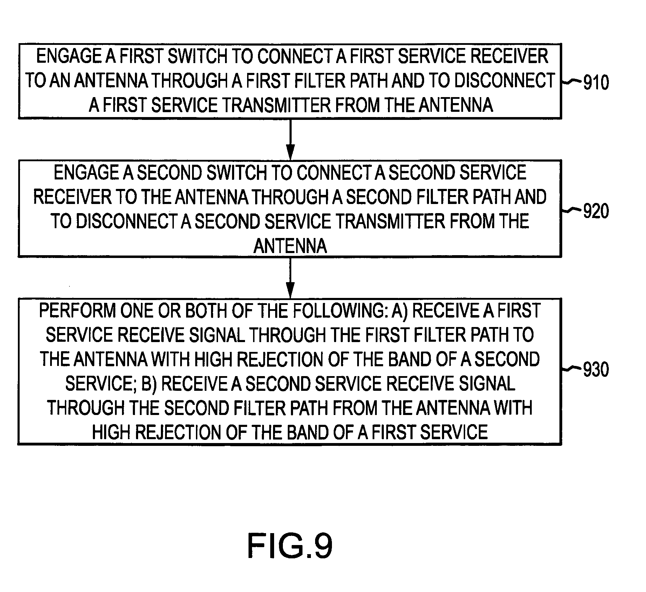

Figure 9 illustrates an example of a first flow diagram for multiple wireless service coexistence. In block 910, engage a first switch to connect a first service receiver to an antenna through a first filter path and to disconnect a first service transmitter from the antenna. In block 920, engage a second switch to connect a second service receiver to the antenna through a second filter path and to disconnect a second service transmitter from the antenna. In block 930, perform one or both of the following: a) receive a first service receive signal through the first filter path to the antenna with high rejection of the band of a second service; b) receive a second service receive signal through the second filter path from the antenna with high rejection of the band of a first service.

In one example, the first service is a wireless personal area network (WPAN). And, in one example, the first service is a Bluetooth (BT). In one example, the second service is a wireless local area network (WLAN). In one example, the first and second switch may be the same switch. In one example, the first and second switches are programmable. In one example, the steps of the flow diagrams of Figures 7, 8 or 9 may be implemented with some or all of the structures shown in Figure 5.

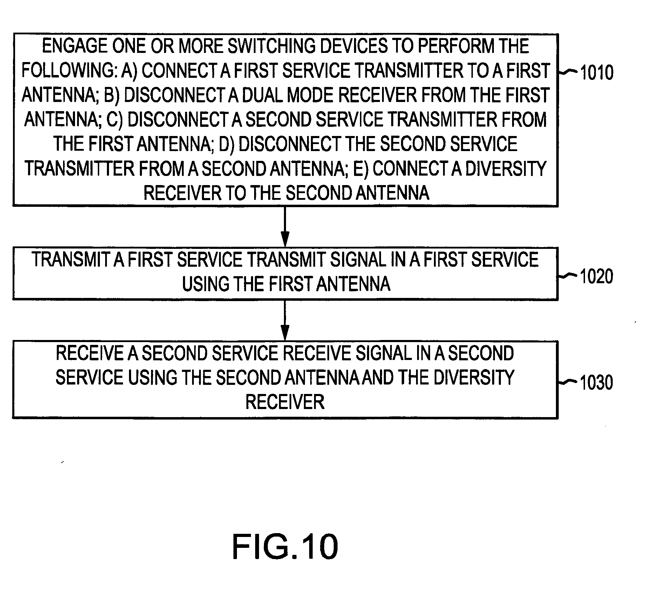

Figure 10 illustrates an example of a second flow diagram for multiple wireless service coexistence. In block 1010, engage one or more switching devices to perform the following: a) connect a first service transmitter to a first antenna; b) disconnect a dual mode receiver from the first antenna; c) disconnect a second service transmitter from the first antenna; d) disconnect the second service transmitter from a second antenna; e) connect a diversity receiver to the second antenna. In block 1020, transmit a first service transmit signal in a first service using the first antenna. In block 1030, receive a second service receive signal in a second service using the second antenna and the diversity receiver.

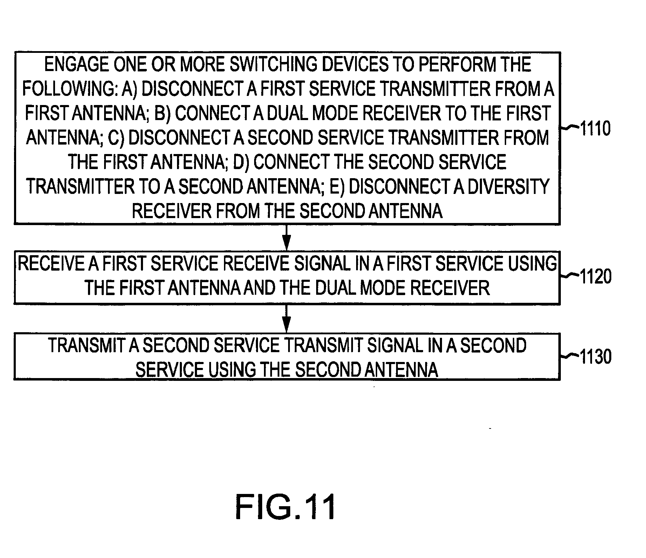

Figure 11 illustrates an example of a second flow diagram for multiple wireless service coexistence. In block 1110, engage one or more switching devices to perform the following: a) disconnect a first service transmitter from a first antenna; b) connect a dual mode receiver to the first antenna; c) disconnect a second service transmitter from the first antenna; d) connect the second service transmitter to a second antenna; e) disconnect a diversity receiver from the second antenna. In block 1120, receive a first service receive signal in a first service using the first antenna and the dual mode receiver. In block 1130, transmit a second service transmit signal in a second service using the second antenna.

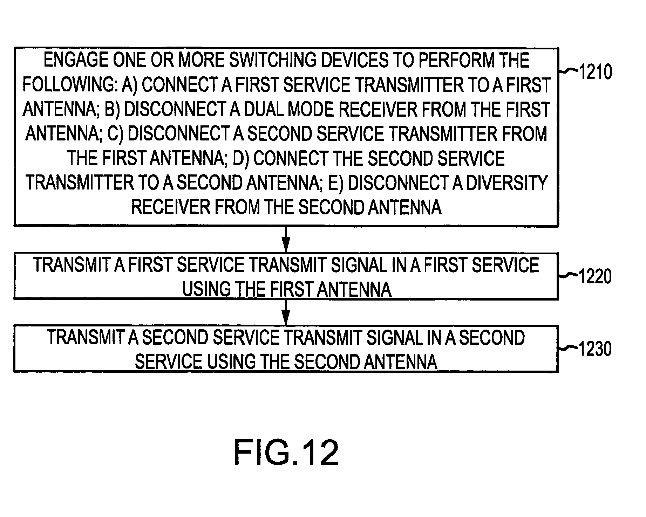

Figure 12 illustrates an example of a second flow diagram for multiple wireless service coexistence. In block 1210, engage one or more switching devices to perform the following: a) connect a first service transmitter to a first antenna; b) disconnect a dual mode receiver from the first antenna; c) disconnect a second service transmitter from the first antenna; d) connect the second service transmitter to a second antenna; e) disconnect a diversity receiver from the second antenna. In block 1220, transmit a first service transmit signal in a first service using the first antenna. In block 1230, transmit a second service transmit signal in a second service using the second antenna.

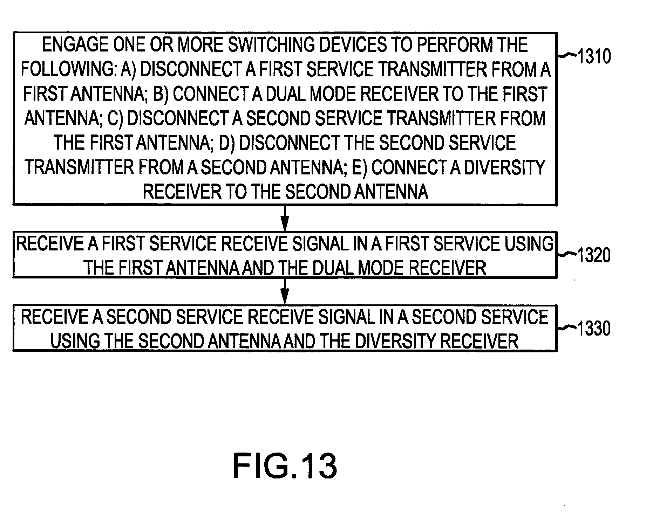

Figure 13 illustrates an example of a second flow diagram for multiple wireless service coexistence. In block 1310, engage one or more switching devices to perform the following: a) disconnect a first service transmitter from a first antenna; b) connect a dual mode receiver to the first antenna; c) disconnect a second service transmitter from the first antenna; d) disconnect the second service transmitter from a second antenna; e) connect a diversity receiver to the second antenna. In block 1320, receive a first service receive signal in a first service using the first antenna and the dual mode receiver. In block 1330, receive a second service receive signal in a second service using the second antenna and the diversity receiver.

In one example, the first service is a wireless personal area network (WPAN). And, in one example, the first service is a Bluetooth (BT). In one example, the second service is a wireless local area network (WLAN). In one example, the steps of the flow diagrams of Figures 10-13 may be implemented with some or all of the structures shown in Figure 3.

One skilled in the art would understand that although the examples in Figures 7-13 disclose the use of switches, other devices, whether electrical, mechanical, software based or a combination thereof (a.k.a. switching device), can be used without affecting the spirit or scope of the present disclosure. Additionally, one skilled in the art would understand that although examples of service types were disclosed in the examples of Figures 7-13, that the service types disclosed are not exclusive and do not preclude other service types not specifically mentioned here.

One skilled in the art would understand that the steps disclosed in the example flow diagrams in Figures 7-13 can be interchanged in their order without departing from the scope and spirit of the present disclosure. Also, one skilled in the art would understand that the steps illustrated in the flow diagram are not exclusive and other steps may be included or one or more of the steps in the example flow diagram may be deleted without affecting the scope and spirit of the present disclosure.

Those of skill would further appreciate that the various illustrative components, logical blocks, modules, circuits, and/or algorithm steps described in connection with the examples disclosed herein may be implemented as electronic hardware, firmware, computer software, or combinations thereof. To clearly illustrate this interchangeability of hardware, firmware and software, various illustrative components, blocks, modules, circuits, and/or algorithm steps have been described above generally in terms of their functionality. Whether such functionality is implemented as hardware, firmware or software depends upon the particular application and design constraints imposed on the overall system. Skilled artisans may implement the described functionality in varying ways for each particular application, but such implementation decisions should not be interpreted as causing a departure from the scope or spirit of the present disclosure.

For example, for a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described therein, or a combination thereof. With software, the implementation may be through modules (e.g., procedures, functions, etc.) that perform the functions described therein. The software codes may be stored in memory units and executed by a processor unit. Additionally, the various illustrative flow diagrams, logical blocks, modules and/or algorithm steps described herein may also be coded as computer-readable instructions carried on any computer-readable medium known in the art or implemented in any computer program product known in the art.

In one or more examples, the steps or functions described herein may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

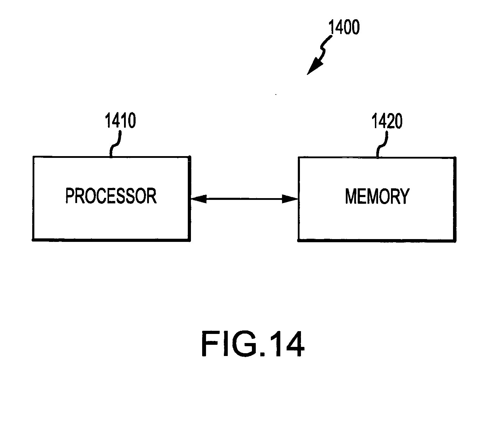

In one example, the illustrative components, flow diagrams, logical blocks, modules and/or algorithm steps described herein are implemented or performed with one or more processors. In one aspect, a processor is coupled with a memory which stores data, metadata, program instructions, etc. to be executed by the processor for implementing or performing the various flow diagrams, logical blocks and/or modules described herein. Figure 14 illustrates an example of a device 1400 comprising a processor 1410 in communication with a memory 1420 for executing the processes for multiple wireless service coexistence. In one example, the device 1400 is used to implement the algorithms illustrated in Figures 7-13. In one aspect, the memory 1420 is located within the processor 1410. In another aspect, the memory 1420 is external to the processor 1410. In one aspect, the processor includes circuitry for implementing or performing the various flow diagrams, logical blocks and/or modules described herein.

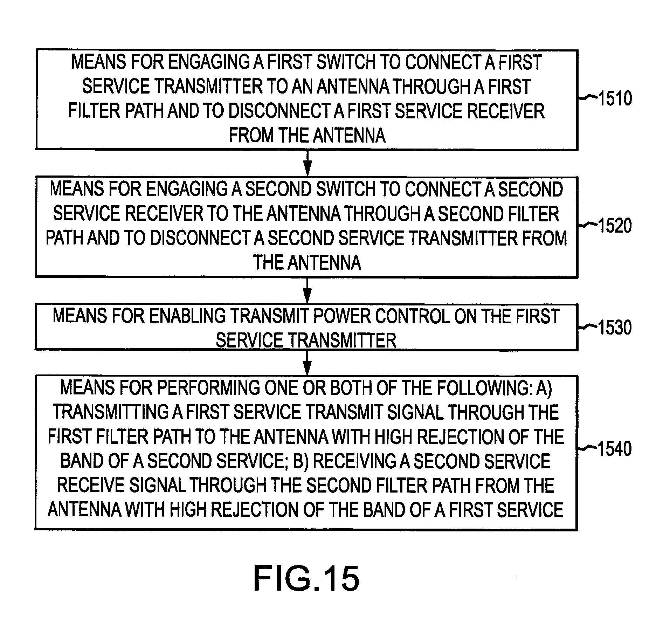

Figure 15 illustrates an example of a device 1500 suitable for multiple wireless service coexistence. In one aspect, the device 1500 is implemented by at least one processor comprising one or more modules configured to provide different aspects of multiple wireless service coexistence as described herein in blocks 1510, 1520, 1530 and 1540. For example, each module comprises hardware, firmware, software, or any combination thereof. In one aspect, the device 1500 is also implemented by at least one memory in communication with the at least one processor.

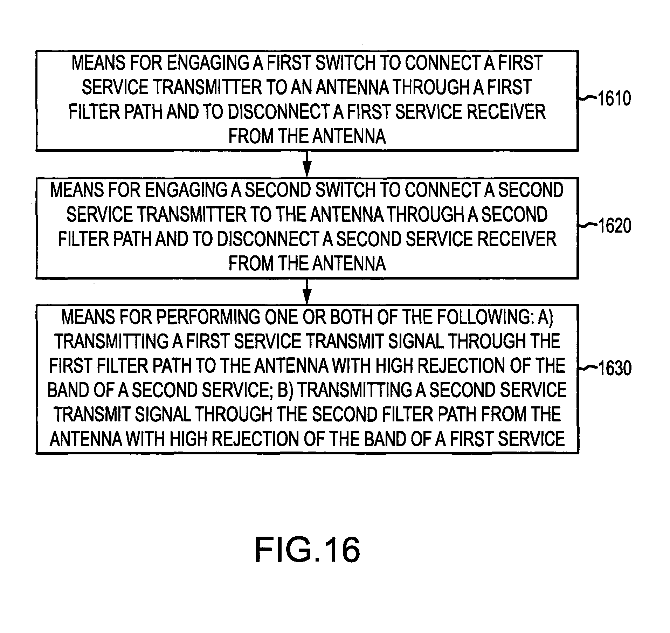

Figure 16 illustrates an example of a device 1600 suitable for multiple wireless service coexistence. In one aspect, the device 1600 is implemented by at least one processor comprising one or more modules configured to provide different aspects of multiple wireless service coexistence as described herein in blocks 1610, 1620 and 1630. For example, each module comprises hardware, firmware, software, or any combination thereof. In one aspect, the device 1600 is also implemented by at least one memory in communication with the at least one processor.

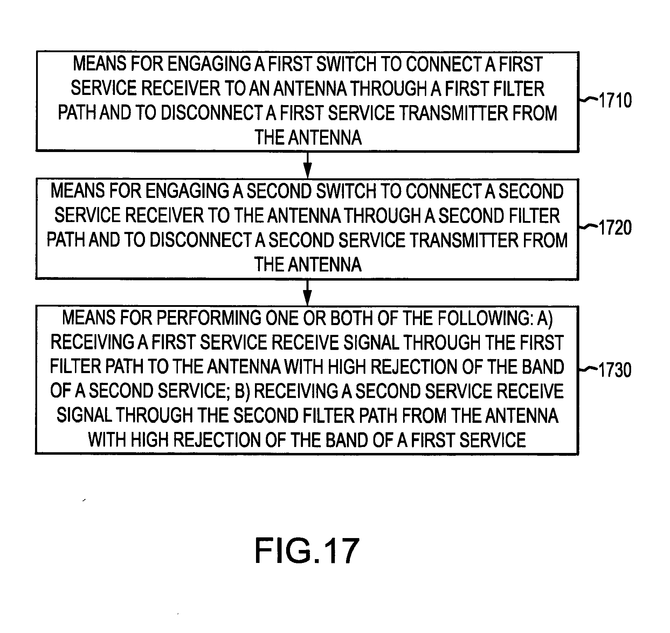

Figure 17 illustrates an example of a device 1700 suitable for multiple wireless service coexistence. In one aspect, the device 1700 is implemented by at least one processor comprising one or more modules configured to provide different aspects of multiple wireless service coexistence as described herein in blocks 1710, 1720 and 1730. For example, each module comprises hardware, firmware, software, or any combination thereof. In one aspect, the device 1700 is also implemented by at least one memory in communication with the at least one processor.

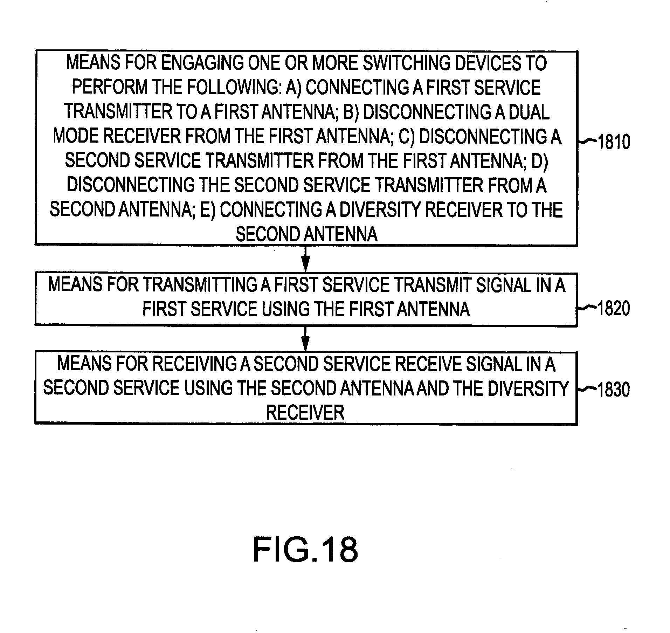

Figure 18 illustrates an example of a second device 1800 suitable for multiple wireless service coexistence. In one aspect, the device 1800 is implemented by at least one processor comprising one or more modules configured to provide different aspects of multiple wireless service coexistence as described herein in blocks 1810, 1820 and 1830. For example, each module comprises hardware, firmware, software, or any combination thereof. In one aspect, the device 1800 is also implemented by at least one memory in communication with the at least one processor.

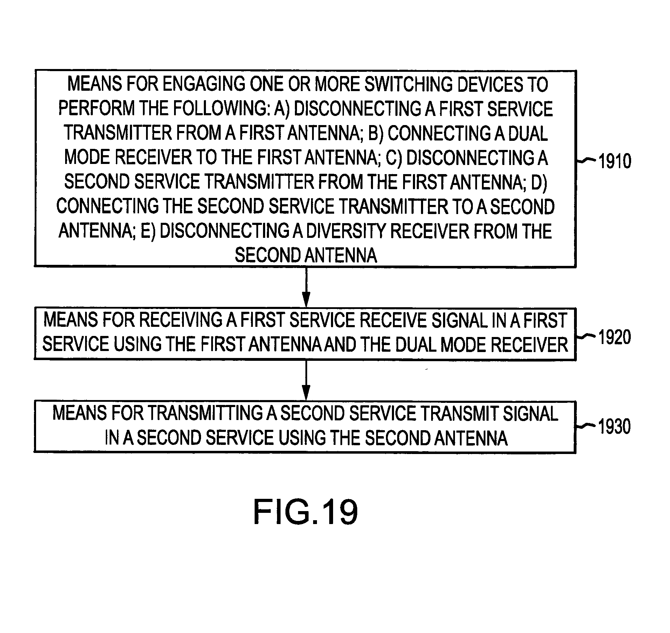

Figure 19 illustrates an example of a second device 1900 suitable for multiple wireless service coexistence. In one aspect, the device 1900 is implemented by at least one processor comprising one or more modules configured to provide different aspects of multiple wireless service coexistence as described herein in blocks 1910, 1920 and 1930. For example, each module comprises hardware, firmware, software, or any combination thereof. In one aspect, the device 1900 is also implemented by at least one memory in communication with the at least one processor.

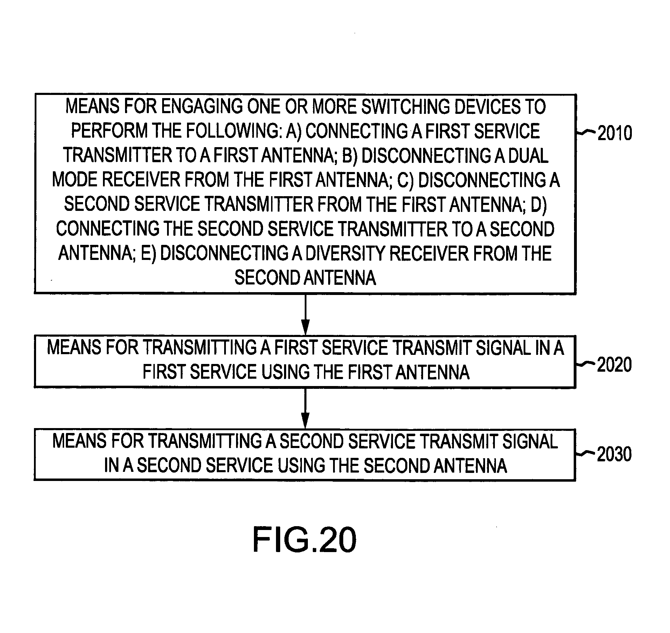

Figure 20 illustrates an example of a second device 2000 suitable for multiple wireless service coexistence. In one aspect, the device 2000 is implemented by at least one processor comprising one or more modules configured to provide different aspects of multiple wireless service coexistence as described herein in blocks 2010, 2020 and 2030. For example, each module comprises hardware, firmware, software, or any combination thereof. In one aspect, the device 2000 is also implemented by at least one memory in communication with the at least one processor.

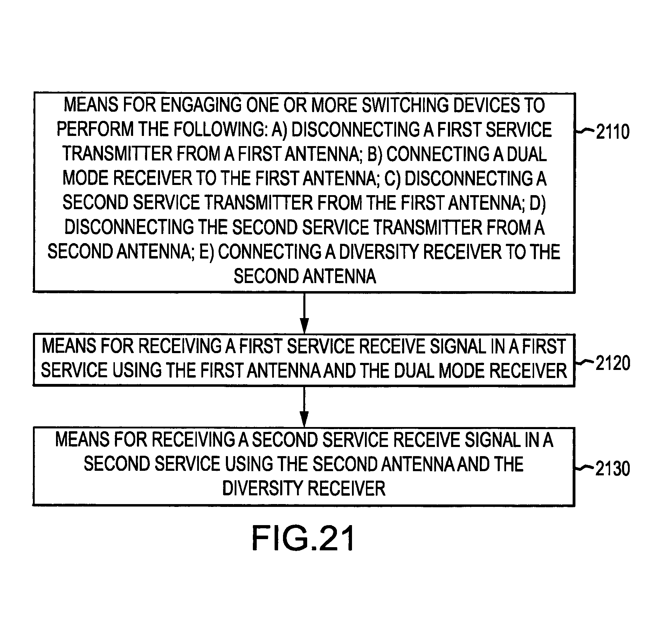

Figure 21 illustrates an example of a second device 2100 suitable for multiple wireless service coexistence. In one aspect, the device 2100 is implemented by at least one processor comprising one or more modules configured to provide different aspects of multiple wireless service coexistence as described herein in blocks 2110, 2120 and 2130. For example, each module comprises hardware, firmware, software, or any combination thereof. In one aspect, the device 2100 is also implemented by at least one memory in communication with the at least one processor.

The previous description of the disclosed aspects is provided to enable any person skilled in the art to make or use the present disclosure. Various modifications to these aspects will be readily apparent to those skilled in the art, and the generic principles defined herein may be applied to other aspects without departing from the scope of the disclosure.

## Claims

1. A method for multiple wireless service coexistence comprising:
engaging one or more switching devices to perform the following:
a) connecting a first service transmitter to a first antenna (1010);
b) disconnecting a dual mode receiver from the first antenna (1010);
c) disconnecting a second service transmitter from the first antenna (1010);
d) disconnecting the second service transmitter from a second antenna (1010);
e) connecting a diversity receiver to the second antenna (1010), wherein the connecting the diversity receiver comprises increasing a filter order associated with the diversity receiver;
transmitting a first service transmit signal in a first service using the first antenna (1020); and
receiving a second service receive signal in a second service using the second antenna and the diversity receiver (1030).

2. The method of claim 1 wherein the first service is Bluetooth (BT) and the second service is wireless local area network (WLAN).

3. A method for multiple wireless service coexistence comprising:
engaging one or more switching devices to perform the following:
a) disconnecting a first service transmitter from a first antenna (1310);
b) connecting a dual mode receiver to the first antenna (1310);
c) disconnecting a second service transmitter from the first antenna (1310);
d) disconnecting the second service transmitter from a second antenna (1310);
e) connecting a diversity receiver to the second antenna (1310), wherein the connecting the diversity receiver comprises increasing a filter order associated with the diversity receiver;
receiving a first service receive signal in a first service using the first antenna and the dual mode receiver (1320); and
receiving a second service receive signal in a second service using the second antenna and the diversity receiver (1330).

4. The method of claim 3 wherein the first service is Bluetooth (BT) and the second service is wireless local area network (WLAN).

5. The method of claim 4 wherein the WLAN complics with the 802.11 protocol.

6. The method of claim 3 wherein the second service receive signal is a copy of the first service receive signal.

7. An apparatus for multiple wireless service coexistence comprising:
means for engaging one or more switching devices to perform the following:
a) connecting a first service transmitter to a first antenna (1810);
b) disconnecting a dual mode receiver from the first antenna (1810);
c) disconnecting a second service transmitter from the first antenna (1810);
d) disconnecting the second service transmitter from a second antenna (1810);
e) connecting a diversity receiver to the second antenna (1810), wherein the connecting the diversity receiver comprises increasing a filter order associated with the diversity receiver;
means for transmitting a first service transmit signal in a first service using the first antenna (1820); and
means for receiving a second service receive signal in a second service using the second antenna and the diversity receiver (1830).

8. The apparatus of claim 7 wherein the first service is Bluetooth (BT) and the second service is wireless local area network (WLAN).

9. An apparatus for multiple wireless service coexistence comprising:
means for engaging one or more switching devices to perform the following:
a) disconnecting a first service transmitter from a first antenna (2110);
b) connecting a dual mode receiver to the first antenna (2110);
c) disconnecting a second service transmitter from the first antenna (2110);
d) disconnecting the second service transmitter from a second antenna (2110);
e) connecting a diversity receiver to the second antenna (2110), wherein the connecting the diversity receiver comprises increasing a filter order associated with the diversity receiver,
means for receiving a first service receive signal in a first service using the first antenna and the dual mode receiver (2120); and
means for receiving a second service receive signal in a second service using the second antenna and the diversity receiver (2130).

10. The apparatus of claim 9 wherein the first service is Bluetooth (BT) and the second service is wireless local area network (WLAN).

11. The apparatus of claim 10 wherein the WLAN complies with the 802.11 protocol.

12. The apparatus of claim 9 wherein the second service receive signal is a copy of the first service receive signal.

13. A computer-readable medium storing a computer program, wherein execution of the computer program is fur:
engaging one or more switching devices to perform the following:
a. connecting a first service transmitter to a first antenna (1010):
b. disconnecting a dual mode receiver from the first antenna (1010);
c. disconnecting a second service transmitter from the first antenna (1010);
d. disconnecting the second service transmitter from a second antenna (1010);
e. connecting a diversity receiver to the second antenna (1010), wherein the connecting the diversity receiver comprises increasing a filter order associated with the diversity receiver;
transmitting a first service transmit signal in a first service using the first antenna (1020); and
receiving a second service receive signal in a second service using the second antenna and the diversity receiver (1030).

14. A computer-readable medium storing a computer program, wherein execution of the computer program is for:
engaging one or more switching devices to perform the following:
a) disconnecting a first service transmitter from a first antenna (1310);
b) connecting a dual mode receiver to the first antenna (1310);
c) disconnecting a second service transmitter from the first antenna (1310);
d) disconnecting the second service transmitter from a second antenna (1310);
e) connecting a diversity receiver to the second antenna (1310), wherein the connecting the diversity receiver comprises increasing a filter order associated with the diversity receiver;
receiving a first service receive signal in a first service using the first antenna and the dual mode receiver (1320); and
receiving a second service receive signal in a second service using the second antenna and the diversity receiver (1330).

## Patentansprüche

1. Ein Verfahren für eine Koexistenz mehrerer Drahtlosdienste, das Folgendes aufweist:
Einsetzen einer oder mehrerer Schalteinrichtungen zum Ausführen von Folgendem:
a) Verbinden eines ersten Service- bzw. Dienstsenders mit einer ersten Antenne (1010);
b) Trennen eines Dual-Modus-Empfängers von der ersten Antenne (1010);
c) Trennen eines zweiten Dienstsenders von der ersten Antenne (1010);
d) Trennen des zweiten Dienstsenders von einer zweiten Antenne (1010);
e) Verbinden eines Diversitätsempfängers mit der zweiten Antenne (1010), wobei das Verbinden des Diversitätsempfängers Erhöhen einer Filterordnung aufweist, die mit dem Diversitätsempfänger assoziiert ist;
Senden eines ersten Dienstsendesignals in einem ersten Dienst unter Verwendung der ersten Antenne (1020); und
Empfangen eines zweiten Dienstempfangssignals in einem zweiten Dienst unter Verwendung der zweiten Antenne und des Diversitätsempfängers (1030).

2. Verfahren nach Anspruch 1, wobei der erste Dienst Bluetooth (BT) ist und der zweite Dienst ein drahtloses lokales Netzwerk (WLAN = wireless local area network) ist.

3. Ein Verfahren für eine Koexistenz mehrerer Drahtlosdienste, das Folgendes aufweist:
Einsetzen einer oder mehrerer Schalteinrichtungen zum Ausführen von Folgendem:
a) Trennen eines ersten Service- bzw. Dienstsenders von einer ersten Antenne (1310);
b) Verbinden eines Dual-Modus-Empfängers mit der ersten Antenne (1310);
c) Trennen eines zweiten Dienstsenders von der ersten Antenne (1310);
d) Trennen des zweiten Dienstsenders von einer zweiten Antenne (1310);
e) Verbinden eines Diversitätsempfängers mit der zweiten Antenne (1310), wobei das Verbinden des Diversitätsempfängers Erhöhen einer Filterordnung aufweist, die mit dem Diversitätsempfänger assoziiert ist;
Empfangen eines ersten Dienstempfangssignals in einem ersten Dienst unter Verwendung der ersten Antenne und des Dual-Modus-Empfängers (1320); und
Empfangen eines zweiten Dienstempfangssignals in einem zweiten Dienst unter Verwendung der zweiten Antenne und des Diversitätsempfängers (1330).

4. Verfahren nach Anspruch 3, wobei der erste Dienst Bluetooth (BT) ist und der zweite Dienst ein drahtloses lokales Netzwerk (WLAN) ist.

5. Verfahren nach Anspruch 4, wobei das WLAN mit dem 802.11-Protokoll konform ist.

6. Verfahren nach Anspruch 3, wobei das zweite Dienstempfangssignal eine Kopie des ersten Dienstempfangssignals ist.

7. Eine Vorrichtung zur Koexistenz mehrerer Drahtlosdienste, die Folgendes aufweist:
Mittel zum Einsetzen einer oder mehrerer Schalteinrichtungen zum Ausführen von Folgendem:
a) Verbinden eines ersten Service- bzw. Dienstsenders mit einer ersten Antenne (1810);
b) Trennen eines Dual-Modus-Empfängers von der ersten Antenne (1810);
c) Trennen eines zweiten Dienstsenders von der ersten Antenne (1810);
d) Trennen des zweiten Dienstsenders von einer zweiten Antenne (1810);
e) Verbinden eines Diversitätsempfängers mit der zweiten Antenne (1810), wobei das Verbinden des Diversitätsempfängers Erhöhen einer Filterordnung aufweist, die mit dem Diversitätsempfänger assoziiert ist;
Mittel zum Senden eines ersten Dienstsendesignals in einem ersten Dienst unter Verwendung der ersten Antenne (1820); und
Mittel zum Empfangen eines zweiten Dienstempfangssignals in einem zweiten Dienst unter Verwendung der zweiten Antenne und des Diversitätsempfängers (1830).

8. Vorrichtung nach Anspruch 7, wobei der erste Dienst Bluetooth (BT) ist und der zweite Dienst ein drahtloses lokales Netzwerk (WLAN) ist.

9. Eine Vorrichtung für eine Koexistenz mehrerer Drahtlosdienste, die Folgendes aufweist:
Mittel zum Einsetzen einer oder mehrerer Schalteinrichtungen zum Ausführen von Folgendem:
a) Trennen eines ersten Service- bzw. Dienstsenders von einer ersten Antenne (2110);
b) Verbinden eines Dual-Modus-Empfängers mit der ersten Antenne (2110);
c) Trennen eines zweiten Dienstsenders von der ersten Antenne (2110);
d) Trennen des zweiten Dienstsenders von einer zweiten Antenne (2110);
e) Verbinden eines Diversitätsempfängers mit der zweiten Antenne (2110), wobei das Verbinden des Diversitätsempfängers Erhöhen einer Filterordnung aufweist, die mit dem Diversitätsempfänger assoziiert ist;
Mittel zum Empfangen eines ersten Dienstempfangssignals in einem ersten Dienst unter Verwendung der ersten Antenne und des Dual-Modus-Empfängers (2120); und
Mittel zum Empfangen eines zweiten Dienstempfangssignals in einem zweiten Dienst unter Verwendung der zweiten Antenne und des Diversitätsempfängers (2130).

10. Vorrichtung nach Anspruch 9, wobei der erste Dienst Bluetooth (BT) ist und der zweite Dienst ein drahtloses lokales Netzwerk (WLAN) ist.

11. Vorrichtung nach Anspruch 10, wobei das WLAN mit dem 802.11-Protokoll konform ist.

12. Vorrichtung nach Anspruch 9, wobei das zweite Dienstempfangssignal eine Kopie des ersten Dienstempfangssignals ist.

13. Ein computerlesbares Medium, das ein Computerprogramm gespeichert hat, wobei die Ausführung des Computerprogramms vorgesehen ist zum:
Einsetzen einer oder mehrerer Schalteinrichtungen zum Ausführen von Folgendem:
a) Verbinden eines ersten Service- bzw. Dienstsenders mit einer ersten Antenne (1010);
b) Trennen eines Dual-Modus-Empfängers von der ersten Antenne (1010);
c) Trennen eines zweiten Dienstsenders von der ersten Antenne (1010);
d) Trennen des zweiten Dienstsenders von einer zweiten Antenne (1010);
e) Verbinden eines Diversitätsempfängers mit der zweiten Antenne (1010), wobei das Verbinden des Diversitätsempfängers Erhöhen einer Filterordnung aufweist, die mit dem Diversitätsempfänger assoziiert ist;
Senden eines ersten Dienstsendesignals in einem ersten Dienst unter Verwendung der ersten Antenne (1020); und
Empfangen eines zweiten Dienstempfangssignals in einem zweiten Dienst unter Verwendung der zweiten Antenne und des Diversitätsempfängers (1030).

14. Ein computerlesbares Medium, das ein Computerprogramm gespeichert hat, wobei die Ausführung des Computerprogramms vorgesehen ist zum:
Einsetzen einer oder mehrerer Schalteinrichtungen zum Ausführen von Folgendem:
a) Trennen eines ersten Service- bzw. Dienstsenders von einer ersten Antenne (1310);
b) Verbinden eines Dual-Modus-Empfängers mit der ersten Antenne (1310);
c) Trennen eines zweiten Dienstsenders von der ersten Antenne (1310);
d) Trennen des zweiten Dienstsenders von einer zweiten Antenne (1310);
e) Verbinden eines Diversitätsempfängers mit der zweiten Antenne (1310), wobei das Verbinden des Diversitätsempfängers Erhöhen einer Filterordnung aufweist, die mit dem Diversitätsempfänger assoziiert ist;
Empfangen eines ersten Dienstempfangssignals in einem ersten Dienst unter Verwendung der ersten Antenne und des Dual-Modus-Empfängers (1320); und
Empfangen eines zweiten Dienstempfangssignals in einem zweiten Dienst unter Verwendung der zweiten Antenne und des Diversitätsempfängers (1330).

## Revendications

1. Procédé pour la coexistence de plusieurs services sans fil, comprenant les étapes suivantes :
engager un ou plusieurs dispositifs de commutation pour réaliser les étapes suivantes :
a) connecter un premier émetteur de service à une première antenne (1010) ;
b) déconnecter un récepteur à deux modes de la première antenne (1010) ;
c) déconnecter un deuxième émetteur de service de la première antenne (1010) ;
d) déconnecter le deuxième émetteur de service d'une deuxième antenne (1010) ;
e) connecter un récepteur à diversité à la deuxième antenne (1010), la connexion du récepteur à diversité comprenant l'augmentation de l'ordre d'un filtre associé au récepteur à diversité ;
émettre un premier signal d'émission de service dans un premier service en utilisant la première antenne (1020) ; et
recevoir un deuxième signal de réception de service dans un deuxième service en utilisant la deuxième antenne et le récepteur à diversité (1030).

2. Procédé selon la revendication 1, dans lequel le premier service est Bluetooth (BT) et le deuxième service est un réseau local sans fil (WLAN).

3. Procédé pour la coexistence de plusieurs services sans fil, comprenant :
engager un ou plusieurs dispositifs de commutation pour réaliser les étapes suivantes :
a) déconnecter un premier émetteur de service d'une première antenne (1310) ;
b) connecter un récepteur à deux modes à la première antenne (1310) ;
c) déconnecter un deuxième émetteur de service de la première antenne (1310) ;
d) déconnecter le deuxième émetteur de service d'une deuxième antenne (1310) ;
e) connecter un récepteur à diversité à la deuxième antenne (1310), la connexion du récepteur à diversité comprenant l'augmentation de l'ordre d'un filtre associé au récepteur à diversité ;
recevoir un premier signal de réception de service dans un premier service en utilisant la première antenne et le récepteur à deux modes (1320) ; et
recevoir un deuxième signal de réception de service dans un deuxième service en utilisant la deuxième antenne et le récepteur à diversité (1330).

4. Procédé selon la revendication 3, dans lequel le premier service est Bluetooth (BT) et le deuxième service est un réseau local sans fil (WLAN).

5. Procédé selon la revendication 4, dans lequel le WLAN est conforme au protocole 802.11.

6. Procédé selon la revendication 3, dans lequel le deuxième signal de réception de service est une copie du premier signal de réception de service.

7. Dispositif pour la coexistence de plusieurs services sans fil, comprenant :
des moyens pour engager un ou plusieurs dispositifs de commutation à réaliser les étapes suivantes :
a) connecter un premier émetteur de service à une première antenne (1810) ;
b) déconnecter un récepteur à deux modes de la première antenne (1810) ;
c) déconnecter un deuxième émetteur de service de la première antenne (1810) ;
d) déconnecter le deuxième émetteur de service d'une deuxième antenne (1810) ;
e) connecter un récepteur à diversité à la deuxième antenne (1810), la connexion du récepteur à diversité comprenant l'augmentation de l'ordre d'un filtre associé au récepteur à diversité ;
des moyens pour émettre un premier signal d'émission de service dans un premier service en utilisant la première antenne (1820) ; et
des moyens pour recevoir un deuxième signal de réception de service dans un deuxième service en utilisant la deuxième antenne et le récepteur à diversité (1830).

8. Dispositif selon la revendication 7, dans lequel le premier service est Bluetooth (BT) et le deuxième service est un réseau local sans fil (WLAN).

9. Dispositif pour la coexistence de plusieurs services sans fil, comprenant :
des moyens pour engager un ou plusieurs dispositifs de commutation à réaliser les étapes suivantes :
a) déconnecter un premier émetteur de service d'une première antenne (2110) ;
b) connecter un récepteur à deux modes à la première antenne (2110) ;
c) déconnecter un deuxième émetteur de service de la première antenne (2110) ;
d) déconnecter le deuxième émetteur de service d'une deuxième antenne (2110) ;
e) connecter un récepteur à diversité à la deuxième antenne (2110), la connexion du récepteur à diversité comprenant l'augmentation de l'ordre d'un filtre associé au récepteur à diversité ;
des moyens pour recevoir un premier signal de réception de service dans un premier service en utilisant la première antenne et le récepteur à deux modes (2120) ; et
des moyens pour recevoir un deuxième signal de réception de service dans un deuxième service en utilisant la deuxième antenne et le récepteur à diversité (2130).

10. Dispositif selon la revendication 9, dans lequel le premier service est Bluetooth (BT) et le deuxième service est un réseau local sans fil (WLAN).

11. Dispositif selon la revendication 10, dans lequel le WLAN est conforme au protocole 802.11.

12. Dispositif selon la revendication 9, dans lequel le deuxième signal de réception de service et une copie du premier signal de réception de service.

13. Support lisible par un ordinateur mémorisant un programme d'ordinateur, l'exécution du programme d'ordinateur étant destinée à :
engager un ou plusieurs dispositifs de commutation à réaliser les étapes suivantes :
a. connecter un premier émetteur de service à une première antenne (1010) ;
b. déconnecter un récepteur à deux modes de la première antenne (1010) ;
c. déconnecter un deuxième émetteur de service de la première antenne (1010) ;
d. déconnecter le deuxième émetteur de service d'une deuxième antenne (1010) ;
e. connecter un récepteur à diversité à la deuxième antenne (1010), la connexion du récepteur à diversité comprenant l'augmentation de l'ordre d'un filtre associé au récepteur à diversité ;
émettre un premier signal d'émission de service dans un premier service en utilisant la première antenne (1020) ; et
recevoir un deuxième signal de réception de service dans un deuxième service en utilisant la deuxième antenne et le récepteur à diversité (1030).

14. Support lisible par un ordinateur mémorisant un programme d'ordinateur, l'exécution du programme d'ordinateur étant destinée à :
engager un ou plusieurs dispositifs de commutation pour réaliser les étapes suivantes :
a) déconnecter un premier émetteur de service d'une première antenne (1310) ;
b) connecter un récepteur à deux modes à la première antenne (1310) ;
c) déconnecter un deuxième émetteur de service de la première antenne (1310) ;
d) déconnecter le deuxième émetteur de service d'une deuxième antenne (1310) ;
e) connecter un récepteur à diversité à la deuxième antenne (1310), la connexion du récepteur à diversité comprenant l'augmentation de l'ordre d'un filtre associé au récepteur à diversité ;
recevoir un premier signal de réception de service dans un premier service en utilisant la première antenne et le récepteur à deux modes (1320) ; et
recevoir un deuxième signal de réception de service dans un deuxième service en utilisant la deuxième antenne et le récepteur à diversité (1330).
